# EUROPÄISCHE PATENTSCHRIFT

(11) **EP 1 580 034 B1**
(45) Veröffentlichungstag und Bekanntmachung des Hinweises auf die Patenterteilung: **06.06.2012**
(21) Anmeldenummer: 05100771.4
(22) Anmeldetag: 04.02.2005
(51) Int. Cl.: B60C 11/12

(54) **Fahrzeugluftreifen**
Pneumatic tire
Pneumatique pour vehicule

(30) Priorität: 23.03.2004 DE 102004014006
(43) Veröffentlichungstag der Anmeldung: 28.09.2005
(73) Patentinhaber: Continental Reifen Deutschland GmbH, 30165 Hannover (DE)
(72) Erfinder: Mundl, Reinhard, 30169, Hannover (DE); Celik, Akif, 31224, Peine (DE); Röger, Bernhard, 52074, Aachen (DE)
(74) Vertreter: Finger, Karsten

(56) Entgegenhaltungen:
- EP-A- 0 968 849
- EP-A- 0 968 850
- EP-A- 1 520 733
- PATENT ABSTRACTS OF JAPAN Bd. 014, Nr. 473 (M-1035), 16. Oktober 1990 (1990-10-16) -& JP 02 189203 A (BRIDGESTONE CORP), 25. Juli 1990 (1990-07-25)
- PATENT ABSTRACTS OF JAPAN Bd. 2000, Nr. 24, 11. Mai 2001 (2001-05-11) -& JP 2001 191741 A (YOKOHAMA RUBBER CO LTD:THE), 17. Juli 2001 (2001-07-17)
- PATENT ABSTRACTS OF JAPAN Bd. 1998, Nr. 04, 31. März 1998 (1998-03-31) & JP 09 323511 A (SUMITOMO RUBBER IND LTD), 16. Dezember 1997 (1997-12-16)
- PATENT ABSTRACTS OF JAPAN Bd. 1995, Nr. 10, 30. November 1995 (1995-11-30) & JP 07 186633 A (BRIDGESTONE CORP), 25. Juli 1995 (1995-07-25)

## Beschreibung

Die Erfindung betrifft einen Fahrzeugluftreifen, insbesondere Winterreifen oder Ganzjahresreifen für Personenkraftwagen, mit einem Laufstreifen, welcher durch Umfangsnuten, Quernuten, Rillen und dergleichen in Profilpositive gegliedert ist, welche mit einer Vielzahl von Einschnitten mit einer Breite zwischen 0,4 mm und 0,8 mm und zusätzlich mit Mikroeinschnitten versehen sind, deren Breite geringer ist als die Breite der Einschnitte und deren Tiefe geringer ist als die Profiltiefe. Die Erfindung betrifft insbesondere Fahrzeugluftreifen, die Profilpositive aufweisen, welche mit wellenförmig, zick-zack- oder stufenförmig verlaufenden Einschnitten versehen sind oder welche zumindest bereichsweise von einem Netz aus Einschnitten überzogen sind.

Aus der gattungsgemäßen JP 02 189203 A ist ein Laufstreifen mit Profilblöcken als Profilpositiven bekannt, welche jeweils mit einer Vielzahl von in Laufstreifenquerrichtung verlaufenden breiteren Einschnitten versehen sind. Bei der in Fig. 5 gezeigten Ausführungsform sind zwischen diesen Einschnitten und diesen Einschnitten und den in Querrichtung verlaufenden Profilblockkanten jeweils paarweise schmale Mikroeinschnitte, parallel zu den Einschnitten verlaufend, angeordnet. Die Mikroeinschnitte weisen eine geringere Tiefe auf als die Einschnitte. Aus der EP-A-1 520 733 ist ein Luftreifen für vereiste oder schneebedeckte Straßen bekannt, welcher einen aus Profilblöcken zusammengesetzten Laufstreifen mit im Wesentlichen in Laufstreifenquerrichtung verlaufenden Einschnitten aufweist. Die Profilblöcke sind ferner mit einer Vielzahl von Mikroeinschnitten versehen, die parallel zueinander und im Wesentlichen in der Umfangsrichtung des Laufstreifen verlaufen, eine Breite zwischen 0,1mm und 0,8 mm und einen gegenseitigen Abstand im Bereich von 0,5 mm bis 2,0 mm aufweisen. Die JP 2001 191741 A betrifft ebenfalls ein Blockprofil für den Laufstreifen eines Fahrzeugluftreifens, bei dem Einschnitte, die in Draufsicht eine Zickzack- bzw. Wellenform aufweisen und im Wesentlichen in Laufstreifenquerrichtung orientiert sind, in Kombination mit Mikroeinschnitten, die parallel zu den Einschnitten verlaufen und ebenfalls eine Zickzack- bzw. Wellenform aufweisen, vorgesehen sind, wobei die Mikroeinschnitte sehr seicht ausgeführt sind. Aus der EP-A-0 968 849 ist es bekannt, die Profilblöcke oder Profilrippen im Laufstreifen eines Reifens mit einem Muster aus feinen oberflächlichen, einander kreuzenden Einschnitten zu versehen, die im Wesentlichen eine Tiefe von 1 mm aufweisen, wobei die Einschnitte teilweise mit Abschnitten versehen sind, deren Tiefe größer ist.

PKW-Winterreifen werden üblicher Weise mit Laufstreifen versehen, deren Profilpositive, beispielsweise Blöcke oder Laufstreifenbänder, jeweils mit einer Vielzahl von zueinander meist parallel angeordneten wellenförmigen oder zick-zackförmigen Einschnitten versehen sind. Aus der EP 0 696 216 B1 ist etwa ein Fahrzeugreifen bekannt, dessen Laufstreifen asymmetrisch gestaltet ist und zwar derart, dass er, auf das Fahrzeug bezogen, einen Laufstreifeninnenabschnitt aufweist, welcher mit treppen- oder sägezahnförmig verlaufenden Einschnitten versehen ist, und einen Lauflaufstreifenaußenabschnitt aufweist, in welchem die Einschnitte wellen- oder zick-zack-förmig verlaufend ausgeführt sind. Dadurch wird im Außenschulterbereich des Reifens die Profilsteifigkeit unter Querkraftbeanspruchung erhöht, im Laufstreifeninnenbereich wird eine gute Übertragung von Traktionskräften sichergestellt, um möglichst viele Griffkanten zur Verfügung zu stellen. Um die Biegesteifigkeit von Profilpositiven gezielt beeinflussen zu können und insbesondere um die Traktions- und Bremseigenschaften des Reifens zu optimieren ist es aus der EP 0 691 222 B1 bekannt, die Einschnitte in den Profilpositiven des Laufstreifenprofils derart anzuordnen, dass sie ein Netz aus regelmäßigen oder im Wesentlichen regelmäßigen Sechsecken bilden.

Die in Winterreifen üblichen Einschnitte werden über die Vulkanisationsform mittels eingesetzter Lamellenbleche hergestellt, die eine Breite zwischen 0,4 und 0,8 mm aufweisen und Einschnitte gleicher Breite erzeugen. Lamellenbleche dieser Dicke sind ausreichend stabil, um dem Einformprozess bis auf Profiltiefe, die bei PKW-Reifen üblicher Weise 8 mm beträgt, standzuhalten. Für eine Verbesserung der Griffeigenschaften und des Traktions- und Bremsvermögens eines Reifens wäre es von Vorteil, zumindest in gewissen Laufstreifenbereichen eine höhere Einschnittdichte vorsehen zu können. Der Erhöhung der Einschnittdichte sind jedoch Grenzen gesetzt, im besonderen Hinblick darauf, dass bei höherer Einschnittdichte die Steifigkeit der Profilelemente deutlich abnimmt. Die Profilblöcke würden zu weich werden, Ausbeulen und Umklappen von Profilabschnitten wären die Folgen. Dazu kommt, dass die Laufstreifen von Winterreifen zur Verbesserung des Griffes auf Eis aus einer weicheren Gummimischung bestehen, als es bei Laufstreifen für Sommerreifen üblich ist.

Die der gegenständlichen Erfindung zu Grunde liegende Aufgabe besteht daher darin, die Profilpositive eines Laufstreifens für einen Winterreifen oder Ganzjahresreifen derart mit Einschnitten versehen zu können, dass die erwähnten, einander widersprechenden Anforderungen gleichzeitig erfüllt werden können.

Gelöst wird die gestellte Aufgabe erfindungsgemäß dadurch, dass die Mikroeinschnitte entweder in zumindest zwei Scharen von einander kreuzenden Mikroeinschnitten verlaufen, wobei die eine Schar von Mikroeinschnitten und die Einschnitte übereinstimmende Erstreckungsrichtungen aufweisen, oder innerhalb der Netzelemente eines Netzes angeordnet sind, welches von den Einschnitten gebildet bzw. mitgebildet ist.

Die Erfindung führt daher neben den beiden in Laufstreifen bekannten "Strukturebenen" - Nuten bzw. Rillen und Einschnitten - eine dritte Strukturebene, nämlich Mikroeinschnitte ein. Die Mikroeinschnitte deren Breite zwischen 0,15 mm und 0,4 mm, insbesondere bis zu 0,3 mm, beträgt, gestatten es, die Einschnittdichte in Profilpositiven wesentlich zu erhöhen und können gemäß einer bevorzugten Ausführung in größerer Anzahl und Dichte vorgesehen werden als die vorhandenen "normalen" Einschnitte. Die Mikroeinschnitte verbessern signifikant den Schnee- und Eisgriff des Laufstreifens, durch ihre geringere Tiefe insbesondere bei neueren Reifen. Gerade bei neuen Reifen mit voller Profiltiefe ist die Beweglichkeit der Profilpositive wesentlich höher als bei schon abgeriebenen Laufstreifen und die Mikroeinschnitte haben daher besondere Bedeutung. Die Einschnitte und die Mikroeinschnitte bilden somit ein das Profilpositiv, beispielsweise einen Profilblock, zumindest teilweise überziehendes Einschnittnetz. Je nach dem, auf welche Weise die Profilblocksteifigkeit beeinflusst werden soll und unter Bedachtnahme auf die Schnee- und Eisgriffeigenschaften kann die Art der Kombination gewählt werden. Dabei kann ein Netz aus breiteren Einschnitten vorgesehen sein, wobei die Mikroeinschnitte innerhalb der Netzelemente angeordnet sind.

Die Mikroeinschnitte können in einer sehr hohen Dichte vorgesehen werden, insbesondere dann, wenn die Gummimischung etwas härter gewählt wird, als dies üblicher Weise bei Winterreifen der Fall ist. Von besonderem Vorteil ist es dabei, wenn der Laufstreifen aus zumindest zwei Schichten unterschiedlich harter Gummimischungen aufgebaut wird, einer äußeren härteren Mischung, die den Oberflächenbereich bei neuem Reifen einnimmt und einer darunter liegenden weicheren Laufflächenmischung, die vorzugsweise dann zum Vorschein kommt, wenn die Mikroeinschnitte durch Abrieb verschwunden sind. Diese weichere Mischung stellt dann einen verbesserten Griff bei teilweise schon abgeriebenem Laufstreifen sicher. Gerade mit dieser Kombination kann ein konstant guter Wintergriff bzw. können konstant gute Winterfahreigenschaften über die gesamte Lebensdauer des Reifens gewährleistet werden.

Besonders vorteilhaft ist es, dass bei der Erfindung in einem Profilpositiv, also beispielsweise in einem Profilblock, die Gesamtlänge sämtlicher Mikroeinschnitte die Gesamtlänge sämtlicher sonstiger Einschnitte übersteigen kann, ohne dass es zu einer unerwünschten Aufweichung des Profilblockes kommt.

Es gibt eine Vielzahl von besonders vorteilhaften erfindungsgemäßen Ausführungsformen.

So können beispielsweise bei wellen-, stufen- oder zick-zack-förmig verlaufenden Einschnitten übereinstimmend zu diesen verlaufende, demnach ebenfalls wellen-, stufen- oder zick-zack-förmig gestaltete Mikroeinschnitte vorgesehen werden. Die Wellen-, Stufen- oder Zick-zack-Form der Mikroeinschnitte kann mit jener der Einschnitte übereinstimmen, ihre Erstreckungsrichtungen können ebenfalls übereinstimmen und es kann zwischen den normalen Einschnitten jeweils zumindest ein Mikroeinschnitt vorgesehen werden. Derartige Anordnungen erlauben es vor allem, die Schnee- und Eisgriffeigenschaften des Laufstreifens gezielt zu verbessern.

Bei einer versetzten Anordnung der Mikroeinschnitte und der Einschnitte in Erstreckungsrichtung derselben kann Einfluss auf die Profilblocksteifigkeit genommen werden. Mit den Mikroeinschnitten und Einschnitten können zudem weitere Einschnitte und Mikroeinschnitte kreuzen.

Bei einer bevorzugten Ausführungsform sind die Netzelemente, welche von den Einschnitten gebildet bzw. mitgebildet sind, Sechsecke oder Dreiecke.

In einer parallelen deutschen Patentanmeldung mit dem internen Geschäftszeichen 204-036-PDE.1, auf welche voll inhaltlich Bezug genommen wird, wird eine Lamelle einer Reifenvulkanisationsform beschrieben, welches einstückig ausgeführt ist und unterschiedlich dicke und hohe Schneidkanten bzw. Schneidstirnflächen aufweist. Eine derartige Lamelle in einer Reifenvulkanisationsform eignet sich besonders gut, um den erfindungsgemäßen Fahrzeugluftreifen mit seiner besonderen Ausgestaltung der Fein- und Feinsteineinschnitte herstellen zu können.

Die Erfindung wird nun anhand der Zeichnung, die schematisch eine Anzahl von Ausführungsformen der Erfindung darstellt, näher beschrieben. Die Figuren (1a bis 1c, 2a bis 2d, 3a und 3b, 4a und 4b) sind Draufsichten auf Profilblöcke, die der Übersichtlichkeit und Einfachheit halber rechteckförmig dargestellt sind.

Die in den Figuren beispielhaft dargestellten Profilblöcke 1 sind insbesondere Profilblöcke für Laufstreifen von PKW-Winterreifen oder PKW-Ganzjahresreifen. Anstelle von Profilblöcken können andere Profilpositive, wie beispielsweise über den Reifenumfang umlaufende Laufstreifenbänder vorgesehen werden, die gleichermaßen gemäß der Erfindung ausgeführt sein können. Die Erfindung umfasst auch Fahrzeugluftreifen mit Laufstreifen, in welchen erfindungsgemäß ausgeführte Profilstrukturen mit nicht erfindungsgemäß und / oder herkömmlich ausgeführten Profilstrukturen kombiniert sind.

Die Profilblöcke 1 können auf übliche Weise von insbesondere auf die vorgesehene Profiltiefe in der Größenordnung von 7 bis 8 mm reichenden Rillen, die nicht dargestellt sind, umgeben sein. Der Doppelpfeil P₁ in jeder Zeichnungsfigur versinnbildlicht die Umfangsrichtungen des Reifens. Üblicherweise hat ein Profilblock 1 eine Umfangserstreckung von 1,5 bis 3 cm oder mehr und eine Quererstreckung von 2,5 bis 4 cm oder mehr. Erfindungsgemäß ausgeführte Profilpositive sind mit einer besonderen Kombination von Einschnitten 2, 3 versehen bzw. zumindest bereichsweise überzogen. Die Einschnitte 2 weisen eine vorzugsweise konstante Breite von insbesondere 0,4 bis 0,8 mm auf und sind mit Einschnitten 3 einer geringeren, vorzugsweise ebenfalls konstanten Breite von 0,15 bis 0,4 mm, insbesondere 0,15 mm bis 0,3 mm, kombiniert, die im Folgenden als Mikroeinschnitte 3 bezeichnet sind. Sämtliche Einschnitte 2, 3 werden bei der Herstellung des Reifens durch Formsegmente der Vulkanisationsform in den Laufstreifen eingeprägt, indem in diese Formsegmente Lamellenbleche entsprechender Anzahl und Ausführung eingesetzt sind.

Die Tiefe der Einschnitte 2 kann der vorgesehenen Profiltiefe, die wie bereits erwähnt bei PKW-Reifen zwischen 7 und 8 mm gewählt wird, entsprechen, die Einschnitte 2 können jedoch auch zumindest stellenweise seichter ausgeführt sein. Die Mikroeinschnitte 3 reichen bis auf eine Tiefe von 1,5 bis 3 mm und können ebenfalls mit über ihren Verlauf konstanter Tiefe oder mit variierender Tiefe ausgeführt werden.

Anhand der einzelnen Figuren werden nun im Folgenden bevorzugte und besonderes vorteilhafte Kombinationen von Einschnitten 2 mit Mikroeinschnitten 3 beschrieben.

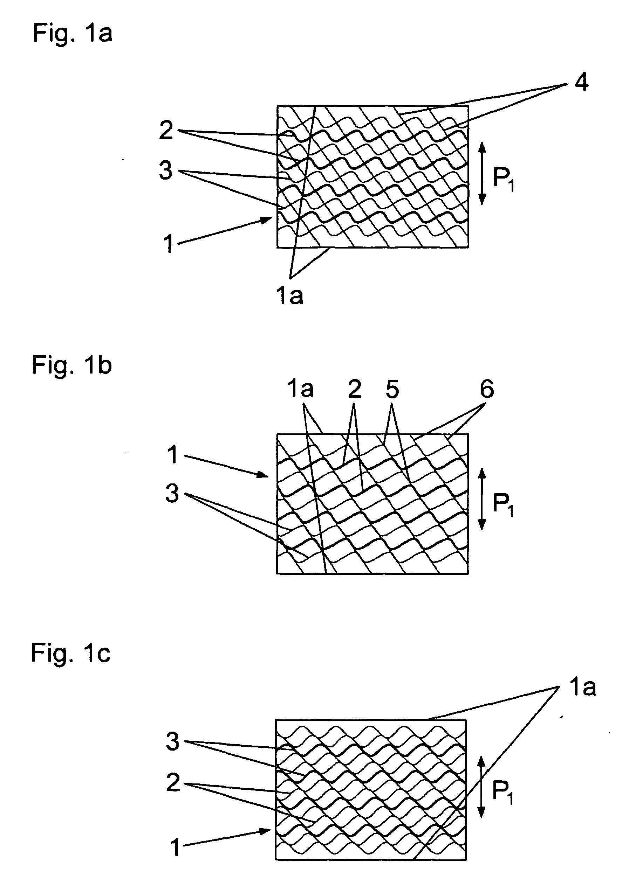

Eine erste Gruppe von Ausführungsformen zeigen Fig. 1a bis 1c. Bei der Variante gemäß Fig.1a ist der Profilblock 1 mit einer Anzahl von in Querrichtung und zueinander parallel verlaufenden wellenförmigen Einschnitten 2 versehen. Die Wellenform der Einschnitte 2 ist regelmäßig mit übereinstimmenden Amplituden und Wellenlängen. Die Einschnitte 2 durchqueren den Profilblock 1 und münden daher in die nicht dargestellten, in Umfangsrichtung verlaufenden Nuten. Sowohl zwischen den einzelnen Einschnitten 2 als auch zwischen den in Reifenquerrichtung orientierten Profilblockkanten 1a und den diesen benachbarten Einschnitten 2 ist je ein Mikroeinschnitt 3 angeordnet. Sämtliche Mikroeinschnitte 3 verlaufen ebenfalls zueinander parallel und weisen eine regelmäßige Wellenform, bei welcher sich die Berge und Täler jeweils aus einer längeren und einer kürzeren Flanke zusammensetzen, mit zu den Einschnitten 2 übereinstimmender Amplitude und auch übereinstimmender Wellenlänge auf, die Mikroeinschnitte 3 sind jedoch gegenüber den Einschnitten 2 um eine halbe Wellenlänge in Reifenquerrichtung versetzt. Somit ist jeweils ein Wellenberg eines Einschnittes 2 einem Wellental eines Mikroeinschnittes 3 zugewandt und ein Wellenberg eines Mikroeinschnittes 3 einem Wellental eines Einschnittes 2 abgewandt. Die Abstände zwischen den zugewandten Wellenbergen und Wellentäler der Einschnitte 2 und der Mikroeinschnitte 3 sind klein, in der Größenordnung von 0,5 bis 1 mm.

Die gegenseitige Anordnung der in Umfangsrichtung abwechselnd vorgesehenen Mikroeinschnitte 3 und Einschnitte 2 ist so getroffen, dass die kürzeren Flanken der Einschnitte 2, 3 auf einer Schar zueinander paralleler Geraden und die längeren Flanken auf einer Schar zueinander parallelen Geraden zum Liegen kommen, wobei die Geraden einander kreuzen. Weitere parallel zueinander und gerade verlaufende Mikroeinschnitte 4 sind in paralleler Anordnung zu den kürzeren Flanken vorgesehen, die jeweils etwa mittig die längeren Flanken kreuzen und den Profilblock 1 durchsetzen. Eine andere Variante ist aus Fig. 1b ersichtlich. Kurze Mikroeinschnitte 5 verbinden die einander zugewandten Berge und Täler der Einschnitte 2 und Mikroeinschnitte 3, weitere Mikroeinschnitte 6 reichen in Verlängerung der kurzen Flanken der den Profilblockkanten 1a benachbarten Mikroeinschnitten 3 bis an die Profilblockkanten 1a.

Fig. 1c zeigt eine Variante der in Fig. 1a dargestellten Ausführung. Sämtliche Einschnitte 2, 3 verlaufen entlang regelmäßig ausgeführter Wellen, die in Querrichtung gegeneinander versetzt sind. Jede dritte Welle, gemessen von jeder der Profilblockkanten 1a ist ein Einschnitt 2, die anderen sind Mikroeinschnitte 3. Die Anordnung ist derart getroffen, dass im Block 1 ein ebenmäßiges Netz aus Einschnitten 2 und Mikroeinschnitten 3 vorliegt.

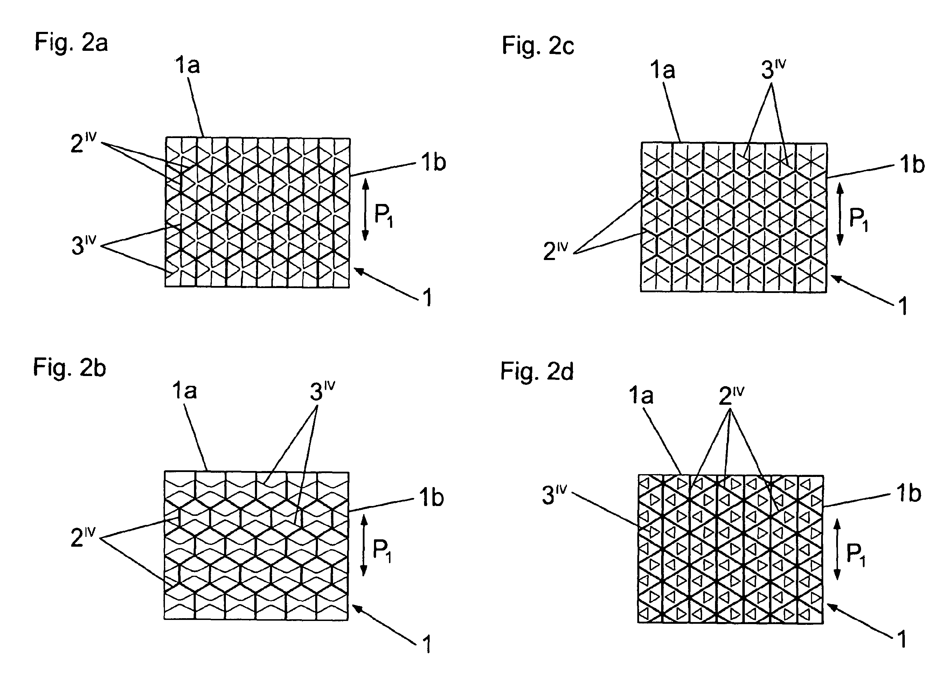

In Fig. 2a bilden Einschnitte 2^{IV} ein Netz aus regelmäßigen Sechsecken, die Mikroeinschnitte 3^{IV} sind Einschnitte, die vom Zentralbereich der Sechsecke in die Eckenbereiche verlaufen. Im Bereich der Profilblockkanten 1a, 1b wird keine quer zur Profilblockkante verlaufende Orientierung der Einschnitte 2^{IV} und 3^{IV} bevorzugt.

Auch in Fig. 2b und Fig. 2c bilden die Einschnitte 2^{IV} ein Netz aus Sechsecken mit entsprechenden Anpassungen an den Profilblockkanten 1a, 1b. Die Mikroeinschnitte 3^{IV} verbinden in Fig. 2b in den Sechsecken V-förmig jeweils zwei der Eckpunkte, sodass, über die Profilblockbreite betrachtet, die Mikroeinschnitte 3^{IV} etwa zick-zack-förmig verlaufen.

Fig. 2c zeigt eine Ausführungsvariante bei der die Mikroeinschnitte 3^{IV} im Zentrum der Sechsecke aus Einschnitten 2^{IV} beginnend strahlenförmig zu den Ecken derselben verlaufen und in einem kurzen Abstand vor diesen enden.

Bei der Ausführungsvariante gemäß Fig. 2d bilden zwei Scharen von den Profilblock 1 diagonal durchsetzenden geraden Einschnitten 2^{IV} gemeinsam mit einer dritten Schar von in Umfangsrichtung verlaufenden geraden Einschnitten 2^{IV} ein Netz aus gleichseitigen Dreiecken. Die Mikroeinschnitte 3^{IV} sind in diese Dreiecke eingeschriebene gleichseitige Dreiecke, die bei der dargestellten Ausführung jedoch keine Verbindung zu den Einschnitten 2^{IV} aufweisen, sondern in einem geringen Abstand vor diesen enden.

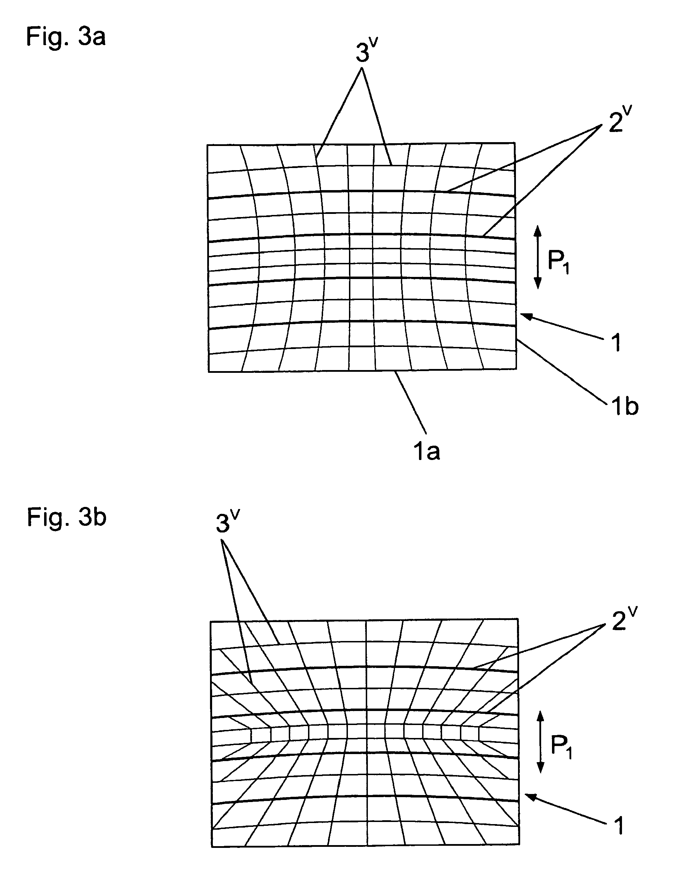

Bei den in Fig. 3a und 3b gezeigten Ausführungsformen bilden die Einschnitte 2^{V} mit den Mikroeinschnitten 3^{V} Einschnittnetze, die sich aus Vierecken zusammensetzen. Durch die gewählte Anordnung der Einschnitte 2^{V} und der Mikroeinschnitte 3^{V} sind diese Vierecke großteils keine regelmäßigen Vierecke. Bei beiden gezeigten Ausführungsvarianten verlaufen die Einschnitte 2^{V} in Querrichtung und parallel zueinander, aber leicht bogenförmig. In Fig. 3a und 3b gibt es ferner Mikroeinschnitte 3^{V}, die im Wesentlichen in Umfangsrichtung und solche, die in Querrichtung verlaufen. In Fig. 3a sind vom mittleren Bereich des Profilblocks 1 zu den beiden zur Umfangsrichtung parallelen Profilblockkanten 1b leicht bogenförmig mit geringfügig kleiner werdenden Radien verlaufende Mikroeinschnitte 3^{V} vorgesehen, wobei die "Krümmungsbäuche" zur Blockmitte weisen und somit eine zumindest im Wesentlichen symmetrische Anordnung bezüglich der in Umfangsrichtung verlaufenden Längsmittelachse des Profilblockes 1 gegeben ist. In Fig. 3b sind die in Umfangsrichtung orientierten Mikroeinschnitte 3^{V} ausgehend von der in Umfangsrichtung verlaufenden Mittellängsachse des Profilblocks 1 V-förmig geknickt, wobei der V-Winkel mit zunehmender Entfernung zu den zur Umfangsrichtung parallelen Profilblockkanten 1b zunimmt.

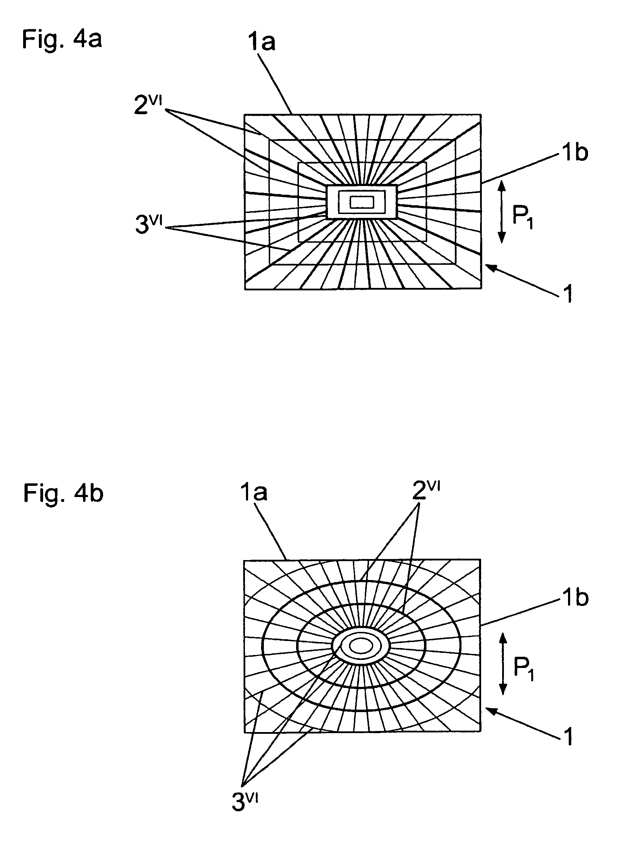

Eine weitere Gruppe von erfindungsgemäßen Ausführungen zeigen Fig. 4a und 4b. Bei der Ausführungsvariante gemäß Fig. 4a ist ein zentrales bzw. mittig im Profilblock 1 angeordnetes Rechteck aus Einschnitten 2^{VI} vorgesehen, die dieses Rechteck umgebenden weiteren Rechtecke sowie die beiden in dieses eingeschriebenen Rechtecke sind aus Mikroeinschnitten 3^{VI} zusammengesetzt. Die strahlenförmig zu den Profilblockkanten 1a, 1b verlaufenden Einschnitte sind abwechselnd Einschnitte 2^{VI} und Mikroeinschnitte 3^{IV}. Eine zu Fig. 4a ähnliche Ausführungsform, bei welcher anstelle von Rechecken Ovale vorgesehen sind, zeigt Fig. 4b. Drei konzentrisch zueinander angeordnete Ovale bestehen aus Einschnitten 2^{VI}, im zentralen Oval sind zwei kleinere Ovale aus Mikroeinschnitten 3^{VI} vorgesehen. Vom zentralen Oval aus einem Einschnitt 2^{VI} ausgehend, verlaufen strahlenförmig zu den Profilblockkanten 1a, 1b weitere Mikroeinschnitte 3^{VI}. Ein weiteres zum Teil schon außerhalb der Profilblockkanten 1a, 1b fortzusetzendes Oval besteht aus Mikroeinschnitten 3^{VI}.

Von besonderem Vorteil ist es, wenn der Laufstreifen aus zumindest zwei Schichten unterschiedlich harter Gummimischungen aufgebaut wird, einer äußeren härteren Mischung, die den Oberflächenbereich bei neuem Reifen einnimmt und einer darunter liegenden weicheren Laufflächenmischung, die vorzugsweise dann zum Vorschein kommt, wenn die Mikroeinschnitte durch Abrieb verschwunden sind. Diese weichere Mischung stellt dann einen verbesserten Griff bei teilweise schon abgeriebenem Laufstreifen sicher.

Die Erfindung ist auf die dargestellten Ausführungsformen nicht eingeschränkt. So sind vielfältige Kombination der einzelnen Ausführungsvarianten miteinander denkbar und weitere erfindungsgemäßer Varianten von Einschnitten und Mikroeinschnitten, die sämtlich vom Schutzbereich des Anspruches 1 umfasst sind, möglich. Erwähnt sei ferner, dass die Einschnitte das betreffende Profilpositiv nicht komplett durchqueren müssen.

## Patentansprüche

1. Fahrzeugluftreifen, insbesondere Winterreifen oder Ganzjahresreifen für Personenkraftwagen, mit einem Laufstreifen, welcher durch Umfangsnuten, Quernuten, Rillen und dergleichen in Profilpositive (1) gegliedert ist, welche mit einer Vielzahl von Einschnitten (2, 2^{IV}, 2^{V}, 2^{VI}) mit einer Breite zwischen 0,4 mm und 0,8 mm und zusätzlich mit Mikroeinschnitten (3, 3^{IV}, 3^{V}, 3 ^{VI}, 4, 5, 6) versehen sind, deren Breite geringer ist als die Breite der Einschnitte (2, 2^{IV} , 2^{V}, 2^{VI}) und deren Tiefe geringer ist als die Profiltiefe,
**dadurch gekennzeichnet,**
**dass** die Mikroeinschnitte (3, 3^{IV}, 3^{V}, 3 ^{VI}, 4, 5)
entweder in zumindest zwei Scharen von einander kreuzenden Mikroeinschnitten (3, 3^{V}, 3^{VI}, 4, 5) verlaufen, wobei die eine Schar von Mikroeinschnitten (3, 3^{V}, 3^{VI}) und die Einschnitte (2, 2^{VI}) übereinstimmende Erstreckungsrichtungen aufweisen,
oder innerhalb der Netzelemente eines Netzes angeordnet sind, welches von den Einschnitten (2^{IV}) gebildet bzw. mitgebildet ist.

2. Fahrzeugluftreifen nach Anspruch 1, **dadurch gekennzeichnet, dass** die Breite der Mikroeinschnitte (3, 3^{IV}, 3^{V}, 3^{VI}, 4, 5) 0,15 mm bis 0,4 mm, insbesondere bis 0,3 mm, beträgt.

3. Fahrzeugluftreifen nach Anspruch 1 oder 2, **dadurch gekennzeichnet, dass** die Tiefe der Mikroeinschnitte (3, 3^{IV}, 3^{V}, 3 ^{VI}, 4, 5) zwischen 1,5 mm und 3 mm beträgt.

4. Fahrzeugluftreifen nach einem der Ansprüche 1 bis 3, **dadurch gekennzeichnet, dass** in einem Profilpositiv, beispielsweise einem Profilblock, die Gesamtlänge sämtlicher Mikroeinschnitte (3, 3^{IV}, 3^{V}, 3^{VI}, 4, 5) die Gesamtlänge sämtlicher Einschnitte (2, 2^{IV}, 2^{V}, 2^{VI}) übersteigt.

5. Fahrzeugluftreifen nach einem der Ansprüche 1 bis 4, **dadurch gekennzeichnet, dass** der Laufstreifen in radialer Richtung aus zumindest zwei Schichten unterschiedlich harter Gummimischungen besteht, von welchen die äußere, in welche die Mikroeinschnitte (3, 3^{IV}, 3^{V}, 3^{VI}, 4, 5) reichen, die härtere ist.

6. Fahrzeugluftreifen nach einem der Ansprüche 1 bis 5, **dadurch gekennzeichnet, dass** die eine Schar von Mikroeinschnitten (3^{V}) im Wesentlichen in Umfangsrichtung des Laufstreifens und die andere Schar von Mikroeinschnitten (3^{V}) im Wesentlichen in Querrichtung des Laufstreifens verläuft.

7. Fahrzeugluftreifen nach einem der Ansprüche 1 bis 5, **dadurch gekennzeichnet, dass** die eine Schar von Mikroeinschnitten (3^{VI}) vom Zentrum des Profilblockes (1) strahlenförmig zu den Profilblockkanten (1a, 1b) verläuft.

8. Fahrzeugluftreifen mit Profilpositiven mit wellen-, stufen- oder zick-zack-förmig verlaufenden Einschnitten, nach einem der Ansprüche 1 bis 5, **dadurch gekennzeichnet, dass** zwischen den wellen-, stufen- oder zick-zack-förmig verlaufenden Einschnitten (2) jeweils zumindest ein Mikroeinschnitt (3) aus der einen Schar von Mikroeinschnitten, insbesondere ebenfalls wellen-, stufen- oder zick-zack-förmig, verläuft.

9. Fahrzeugluftreifen nach Anspruch 8, **dadurch gekennzeichnet, dass** die Wellen-, Stufen- oder Zick-Zack-Form der Mikroeinschnitte (3) mit jener der Einschnitte (2) übereinstimmt.

10. Fahrzeugluftreifen nach Anspruch 8 oder 9, **dadurch gekennzeichnet, dass** die Mikroeinschnitte (3) gegenüber den Einschnitten (2) in Erstreckungsrichtung versetzt angeordnet sind.

11. Fahrzeugluftreifen nach einem der Ansprüche 1 bis 5, **dadurch gekennzeichnet, dass** die Netzelemente, welche von den Einschnitten (2^{IV}) gebildet bzw. mitgebildet sind, Sechsecke, insbesondere regelmäßige Sechsecke, sind.

12. Fahrzeugluftreifen nach Anspruch 11, **dadurch gekennzeichnet, dass** die Mikroeinschnitte (3^{IV}) vom Zentralbereich der Sechsecke in deren Eckenbereiche verlaufen.

13. Fahrzeugluftreifen nach Anspruch 11, **dadurch gekennzeichnet, dass** die Mikroeinschnitte (3^{IV}) V-förmig jeweils zwei der Eckpunkte der Sechsecke verbinden, derart, dass, über die Profilblockbreite betrachtet, die Mikroeinschnitte (3^{IV}) etwa zick-zack-förmig verlaufen.

14. Fahrzeugluftreifen nach einem der Ansprüche 1 bis 5, **dadurch gekennzeichnet, dass** die Netzelemente, welche von den Einschnitten (2^{IV}) gebildet bzw. mitgebildet sind, Dreiecke, insbesondere gleichseitige Dreiecke, sind.

15. Fahrzeugluftreifen nach Anspruch 14, **dadurch gekennzeichnet, dass** die Mikroeinschnitte (3^{IV}) Dreiecke, insbesondere gleichseitige Dreiecke, bilden, welche in die Netzelemente eingeschrieben sind.

## Claims

1. Pneumatic vehicle tyre, in particular a winter tyre or all-year tyre for passenger cars, with a tread rubber, which is divided by circumferential grooves, transverse grooves, channels and the like into profile positives (1), which are provided with a multiplicity of sipes (2, 2^{IV}, 2^{V}, 2^{VI}) with a width of between 0.4 mm and 0.8 mm and additionally with micro-sipes (3, 3^{IV}, 3^{V}, 3^{VI}, 4, 5, 6), the width of which is less than the width of the sipes (2, 2^{IV}, 2^{V}, 2^{VI}) and the depth of which is less than the profile depth, **characterized in that** the micro-sipes (3, 3^{IV}, 3^{V}, 3^{VI}, 4, 5) either run in at least two groups of crossing micro-sipes (3, 3^{V}, 3^{VI}, 4, 5), the one group of micro-sipes (3, 3^{V}, 3^{VI}) and the sipes (2, 2^{VI}) having coinciding directions of extent, or are arranged within the network elements of a network that is formed or co-formed by the sipes (2^{IV}).

2. Pneumatic vehicle tyre according to Claim 1, **characterized in that** the width of the micro-sipes (3, 3^{IV}, 3^{V}, 3^{VI}, 4, 5) is 0.15 mm to 0.4 mm, in particular up to 0.3 mm.

3. Pneumatic vehicle tyre according to Claim 1 or 2, **characterized in that** the depth of the micro-sipes (3, 3^{IV}, 3^{V}, 3^{VI}, 4, 5) is between 1.5 mm and 3 mm.

4. Pneumatic vehicle tyre according to one of Claims 1 to 3, **characterized in that**, in a profile positive, for example a profile block, the overall length of all the micro-sipes (3, 3^{IV}, 3^{V}, 3^{VI}, 4, 5) exceeds the overall length of all the sipes (2, 2^{IV}, 2^{V}, 2^{VI}).

5. Pneumatic vehicle tyre according to one of Claims 1 to 4, **characterized in that** the tread rubber consists in the radial direction of at least two layers of rubber mixtures of differing hardness, of which the outer layer, into which the micro-sipes (3, 3^{IV}, 3^{V}, 3^{VI}, 4, 5) reach, is the harder.

6. Pneumatic vehicle tyre according to one of Claims 1 to 5, **characterized in that** the one group of micro-sipes (3^{V}) runs substantially in the circumferential direction of the tread rubber and the other group of micro-sipes (3^{V}) runs substantially in the transverse direction of the tread rubber.

7. Pneumatic vehicle tyre according to one of Claims 1 to 5, **characterized in that** the one group of micro-sipes (3^{VI}) runs from the centre of the profile block (1) in a radial form to the profile block edges (1a, 1b).

8. Pneumatic vehicle tyre with profile positives having sipes which run in a wavy, stepped or zigzagging form, according to one of Claims 1 to 5, **characterized in that** between the sipes (2) running in a wavy, stepped or zigzagging form there respectively runs at least one micro-sipe (3) from the one group of micro-sipes, in particular likewise in a wavy, stepped or zigzagging form.

9. Pneumatic vehicle tyre according to Claim 8, **characterized in that** the wavy, stepped or zigzagging form of the micro-sipes (3) coincides with that of the sipes (2).

10. Pneumatic vehicle tyre according to Claim 8 or 9, **characterized in that** the micro-sipes (3) are arranged offset from the sipes (2) in the direction of extent.

11. Pneumatic vehicle tyre according to one of Claims 1 to 5, **characterized in that** the network elements that are formed or co-formed by the sipes (2^{IV}) are hexagons, in particular regular hexagons.

12. Pneumatic vehicle tyre according to Claim 11, **characterized in that** the micro-sipes (3^{IV}) run from the central region of the hexagons into the corner regions thereof.

13. Pneumatic vehicle tyre according to Claim 11, **characterized in that** the micro-sipes (3^{IV}) respectively join two of the corner points of the hexagons in a V-shaped manner in such a way that, when viewed over the width of the profile block, the micro-sipes (3^{IV}) run approximately in a zigzagging form.

14. Pneumatic vehicle tyre according to one of Claims 1 to 5, **characterized in that** the network elements that are formed or co-formed by the sipes (2^{IV}) are triangles, in particular equilateral triangles.

15. Pneumatic vehicle tyre according to Claim 14, **characterized in that** the micro-sipes (3^{IV}) form triangles, in particular equilateral triangles, which are inscribed in the network elements.

## Revendications

1. Bandage pneumatique pour roue de véhicule, en particulier bandage pneumatique d'hiver ou bandage pneumatique toutes saisons pour voitures automobiles, le bandage présentant une bande de roulement divisée par des rainures périphériques, des rainures transversales, des sillons et similaires en profils positifs (1) dotés de plusieurs entailles (2, 2^{IV}, 2^{V}, 2^{VI}) dont la largeur est comprise entre 0,4 mm et 0,8 mm et en outre de micro-entailles (3, 3^{IV}, 3^{V}, 3^{VI}, 4, 5, 6) dont la largeur est inférieure à la largeur des entailles (2, 2^{IV}, 2^{V}, 2^{VI}) et dont la profondeur est inférieure à la profondeur du profil,
**caractérisé en ce que**
les micro-entailles (3, 3^{IV}, 3^{V}, 3^{VI}, 4, 5) forment au moins deux ensembles de micro-entailles (3, 3^{V}, 3^{VI}, 4, 5) qui se croisent mutuellement, un ensemble de micro-entailles (3, 3^{V}, 3^{VI}) et les entailles (2, 2^{VI}) présentant des directions d'extension qui se correspondent ou étant disposés à l'intérieur des éléments d'un réseau formé par ou avec les entailles (2^{IV}).

2. Bandage pneumatique pour roue de véhicule selon la revendication 1, **caractérisé en ce que** la largeur des micro-entailles (3, 3^{IV}, 3^{V}, 3^{VI}, 4, 5) est de 0,15 mm à 0,4 mm en particulier de jusque 0,3 mm.

3. Bandage pneumatique pour roue de véhicule selon les revendications 1 ou 2, **caractérisé en ce que** la profondeur des micro-entailles (3, 3^{IV}, 3^{V}, 3^{vI}, 4, 5) est comprise entre 1,5 mm et 3 mm.

4. Bandage pneumatique pour roue de véhicule selon l'une des revendications 1 à 3, **caractérisé en ce que** dans un profil positif, par exemple dans un bloc profilé, la longueur totale de toutes les micro-entailles (3, 3^{IV}, 3^{V}, 3^{VI}, 4, 5) dépasse la longueur totale de toutes les entailles (2, 2^{IV}, 2^{V}, 2^{VI})_{.}

5. Bandage pneumatique pour roue de véhicule selon l'une des revendications 1 à 4, **caractérisé en ce que** dans la direction radiale, la bande de roulement est constituée d'au moins deux couches de mélanges de caoutchouc de différentes duretés, la couche extérieure dans laquelle pénètrent les micro-entailles (3, 3^{IV}, 3^{V}, 3^{VI}, 4, 5) étant la plus dure.

6. Bandage pneumatique pour roue de véhicule selon l'une des revendications 1 à 5, **caractérisé en ce qu'**un des ensembles de micro-entailles (3^{V}) s'étend essentiellement dans la direction périphérique de la bande de roulement et l'autre ensemble de micro-entailles (3^{V}) essentiellement dans la direction transversale de la bande de roulement.

7. Bandage pneumatique pour roue de véhicule selon l'une des revendications 1 à 5, **caractérisé en ce qu'**un des ensembles de micro-entailles (3^{VI}) s'étend du centre du bloc profilé (1) en forme de rayon vers les bords (1a, 1b) du bloc profilé.

8. Bandage pneumatique pour roue de véhicule présentant des profils positifs à entailles qui s'étendent en ondulations, en gradins ou en zigzag selon l'une des revendications 1 à 5, **caractérisé en ce qu'**au moins une micro-entaille (3) d'un des ensembles de micro-entailles, en particulier également de forme ondulée, en gradins ou en zigzag, s'étend entre les entailles (2) qui s'étendent en ondulations, en gradins ou en zigzag.

9. Bandage pneumatique pour roue de véhicule selon la revendication 8, **caractérisé en ce que** la forme en ondulations, en gradins ou en zigzag des micro-entailles (3) correspond à celle des entailles (2).

10. Bandage pneumatique pour roue de véhicule selon les revendications 8 ou 9, **caractérisé en ce que** les micro-entailles (3) sont disposées en décalage par rapport aux entailles (2) dans la direction de leur extension.

11. Bandage pneumatique pour roue de véhicule selon l'une des revendications 1 à 5, **caractérisé en ce que** les éléments de réseau qui sont formés par ou avec les entailles (2^{IV}) sont des hexagones et en particulier des hexagones réguliers.

12. Bandage pneumatique pour roue de véhicule selon la revendication 11, **caractérisé en ce que** les micro-entailles (3IV) s'étendent depuis la partie centrale des hexagones jusque dans leur partie de sommet.

13. Bandage pneumatique pour roue de véhicule selon la revendication 11, **caractérisé en ce que** les micro-entailles (3IV) relient deux des sommets de l'hexagone de telle sorte que, vu sur la largeur du bloc profilé, les micro-entailles (3^{IV}) s'étendent sensiblement en zigzag.

14. Bandage pneumatique pour roue de véhicule selon l'une des revendications 1 à 5, **caractérisé en ce que** les éléments de réseau formés par ou avec les entailles (2^{IV}) sont des triangles et en particulier des triangles isocèles.

15. Bandage pneumatique pour roue de véhicule selon la revendication 14, **caractérisé en ce que** les micro-entailles (3^{IV}) sont des triangles et en particulier des triangles équilatéraux inscrits dans les éléments de réseau.
